# EUROPEAN PATENT APPLICATION

(11) **EP 3 279 099 A1**
(43) Date of publication of application: **07.02.2018**
(21) Application number: 16773261.9
(22) Date of filing: 04.04.2016
(51) Int. Cl.: B65D 1/00, B32B 27/00, B32B 27/32

(54) **MULTILAYERED CONTAINER**

(30) Priority: 03.04.2015 JP 2015076597; 26.01.2016 JP 2016012575
(71) Applicant: Toyo Seikan Group Holdings, Ltd., Shinagawa-ku Tokyo 141-8627 (JP)
(72) Inventor: MORI, Kota, Yokohama-shi Kanagawa 240-0062 (JP); ISHIHARA, Takayuki, Yokohama-shi Kanagawa 240-0062 (JP); TASHIRO, Yuuki, Yokohama-shi Kanagawa 240-0062 (JP); OTSUKI, Azusa, Yokohama-shi Kanagawa 240-0062 (JP)
(74) Representative: J A Kemp
(86) International application number: PCT/JP2016/061027
(87) International publication number: WO 2016/159381

(57) **Abstract**

A multilayered container having an intermediate layer that contains a resin composition B obtained by blending a resin composition A that contains at least a resin (a) having a hydroxyl group with a carboxyl compound (b) of which the α-carbon is quaternary and of which the carboxyl group is forming no metal salt, wherein a ratio (COOH/OH) of the amount of the carboxyl groups of the carboxyl compound (b) to the amount of the hydroxyl groups of the resin (a) in the resin composition A is not more than 0.4. The multilayered container maintains excellent anti-eluting property and flavor-retaining property even when it is subjected to the retort sterilization.

## Description

### Technical Field:

This invention relates to a multilayered container that contains, as an intermediate layer of regrind material, a material recovered at the time of forming a container that has a layer of a hydroxyl group-containing resin such as ethylene-vinyl alcohol copolymer and the like. More specifically, the invention relates to a multilayered container suppressing a decrease in the anti-eluting property and in the flavor-retaining property specific to the layer of a regrind resin such as of ethylene-vinyl alcohol copolymer and the like.

### Background Art:

Olefin resins such as polyethylene and polypropylene, and polyester resins such as polyethylene terephthalate and the like, excel in their properties such as formability, transparency, mechanical strength and resistance against chemicals, and have been used in a variety of fields as packing materials like films, sheets and bottles.

These olefin resins and polyester resins, however, do not have a sufficient degree of oxygen-barrier property. To improve the preservability of the contents, therefore, there have now been widely used multilayered containers that have an intermediate layer of a gas-barrier resin such as ethylene-vinyl alcohol copolymer (hereinafter often "EVOH copolymer") that is a resin having excellent gas-barrier property between an inner layer and an outer layer of an olefin resin or a polyester resin.

Here, a scrap resin is generated when the containers are formed by using the thermoplastic resin such as the olefin resin or the polyester resin. For instance, when of the containers are formed by press-forming a sheet, a scrap resin is generated like sheets after a number of disk-like sheets are punched. To recover and reuse the scrap resin, therefore, attempts have been made to regrind the recovered scrap resin and use it as an intermediate layer.

In fact, however, not only the olefin resin and the polyester resin but also the EVOH resin are contained in the material recovered during the formation of the containers that have, as described above, the layer of the gas-barrier resin such as the EVOH copolymer used for improving the gas-barrier property of the containers. The EVOH copolymer tends to be deteriorated at the time of forming the sheet by melt-extrusion. As compared to the multilayered containers formed by using virgin resins, therefore, there arouse problems such as yellowing, scorching, gelling, deteriorated appearance due to abnormal flow, an increase in the total amount of organic carbon eluted out and in the amount of acetaldehyde eluted out due to the elution of low-molecular components caused by degradation resulting in a decrease in the flavor-retaining property.

To solve the problems specific to the recovered materials containing the EVOH copolymer, the following patent document 1 discloses an art of using a recovered material that comprises an olefin resin and an EVOH copolymer, wherein upon mixing a virgin olefin resin having a different melt index, it is made possible to prevent the occurrence of scorching, gelation, a decrease in the appearance caused by abnormal flow and a decrease in the flavor-retaining property.

Further, the following patent document 2 proposes an art wherein when a laminate that contains a saponified product of an ethylene-vinyl acetate copolymer is to be reused, a resin composition is added to the pulverized product of the laminate, the resin composition being the one that contains an olefin/unsaturated carboxylic acid copolymer and/or an olefin/unsaturated carboxylic acid/unsaturated carboxylic acid ester copolymer (A), a fatty acid metal salt (B), and/or a metal compound (C) such as metal oxide.

### Prior Art Documents:

### Patent Documents:

Patent document 1: JP-A-7-195635
Patent document 2: JP-A-2002-234979

### Outline of the Invention:

### Problems that the Invention is to Solve:

When subjected to high-temperature and highly humid conditions such as of the retort sterilization, however, even the multilayered structures described in the above prior technical documents were still poor in the anti-eluting property and were not still satisfactory with respect to the flavor-retaining property. That is, the EVOH copolymer may be thermally decomposed easily. In forming the multilayered container, therefore, the recovered material that contains the EVOH copolymer undergoes the decomposition upon receiving thermal hysteresis and produces low-molecular components. Therefore, if subjected to the retort sterilization, the decomposed product elutes out and migrates into the content and deteriorates the flavor of the content.

It is, therefore, an object of the present invention to provide a multilayered container that contains, as a layer of regrind material, a material recovered at the time of forming the container containing an EVOH copolymer and the like, the multilayered container maintaining excellent anti-eluting property and flavor-retaining property even when it is subjected to the retort sterilization.

### Means for Solving the Problems:

According to the present invention, there is provided a multilayered container having an intermediate layer that contains a resin composition B obtained by blending a resin composition A that contains at least a resin (a) having a hydroxyl group with a carboxyl compound (b) of which the α-carbon is quaternary and of which the carboxyl group is forming no metal salt, wherein a ratio (COOH/OH) of the amount of the carboxyl groups of the carboxyl compound (b) to the amount of the hydroxyl groups of the resin (a) in the resin composition A is not more than 0.4.

In the multilayered container of the present invention, it is desired that:
1. The carboxyl compound (b) is an ethylene-methacrylic acid copolymer;
2. The resin (a) is an ethylene-vinyl alcohol copolymer;
3. The resin composition A, further, contains an olefin resin;
4. The ratio (COOH/OH) of the amount of the carboxyl groups of the carboxyl compound (b) to the amount of the hydroxyl groups of the resin (a) in the resin composition A is 0.04 to 0.4;
5. The resin composition A, further, contains an oxidizing organic component and a transition metal compound, and a ratio (COOH/OH) of the amount of the carboxyl groups of the carboxyl compound (b) to the amount of the hydroxyl groups of the resin (a) in the resin composition A is not more than 0.04;
6. The total amount of the organic carbon eluted out after the retort sterilization is less than 3.0 ppm;
7. The amount of the acetaldehyde eluted out after the retort sterilization is less than 40 ppb;
8. A decomposition start temperature of the ethylene-vinyl alcohol copolymer in the resin composition B is higher by 20°C or more than a decomposition start temperature of the ethylene-vinyl alcohol copolymer in the resin composition A;
9. The multilayered container includes inner and outer layers comprising an olefin resin and an intermediate barrier layer comprising a barrier resin, and the intermediate layers that contain the resin composition B are interposed between any adjacent layers selected from the inner layer, the outer layer and the intermediate barrier layer;
10. The intermediate barrier layer has a multilayered structure comprising a barrier layer/an oxygen-absorbing layer/a barrier layer;
11. The layer constitution comprises a polypropylene inner layer/a regrind resin layer/an adhesive layer/a barrier layer/an oxygen-absorbing layer/a barrier layer/an adhesive layer/a regrind resin layer/a polypropylene outer layer in this order from the inner side, and the regrind resin layer contains the resin composition B;
12. A deodorizing component is contained in any layer that is positioned on the inner side of the oxygen-absorbing layer; and
13. The layer constitution comprises a polypropylene inner layer/a deodorizing component-containing layer/as required, a regrind resin layer/an adhesive layer/a barrier layer/an oxygen-absorbing layer/a barrier layer/an adhesive layer/a regrind resin layer/a polypropylene outer layer in this order from the inner side, and the regrind resin layer contains the resin composition B.

### Effects of the Invention:

As described above, the scrap resin (recovered material) generated at the time of forming the containers has already been subjected to the thermal hysteresis at the time of forming the sheet. If used again for forming the containers, therefore, the scrap resin receives again the thermal hysteresis. In the resin having a hydroxyl group, such as the EVOH copolymer, on the other hand, the C-O bond derived from the hydroxyl group has a bond energy smaller than that of the C-H bond. Besides, hydrogen bonded to the α-carbon to which a hydroxyl group is bonded, splits off easily. Upon receiving the thermal hysteresis, therefore, the resin undergoes the thermal decomposition more easily than the olefin resin or the like.

According to the present invention, therefore, it is made possible to suppress the thermal decomposition by causing the hydroxyl group of the EVOH copolymer to react with the carboxyl group of the carboxyl compound (b) of which the α-carbon is quaternary or by causing the metal salt compounds in the resin (residual catalyst in the resin, additives such as lubricant, etc.) to interact with the carboxyl compound (b). Further, the carboxyl compound (b) used in the invention has the α-carbon which is quaternary and, therefore, undergoes the decomposition little and is not decomposed despite it has received the thermal hysteresis.

That is, in the multilayered container of the present invention, the resin (a) having a hydroxyl group, such as ethylene-vinyl alcohol copolymer, is blended with the carboxyl compound (b) of which the α-carbon is quaternary at the above-mentioned ratio enabling a decomposition start temperature of the resin (a) in the resin composition B (resin composition A containing the resin (a) + carboxyl compound (b)) to be elevated by not less than 20°C compared to that of the resin (a) that is not blended with the carboxyl compound (b). As a result of suppressing the thermal decomposition, it is allowed to effectively prevent the formation of the low-molecular components and, therefore, to suppress a decrease in the anti-eluting property and a decrease in the flavor-retaining property.

In the multilayered container of the invention, further, it is possible to suppress a decrease in the decomposition start temperature of the resin composition even in the case where the resin composition A contains an oxygen-absorbing resin composition that contains a transition metal catalyst that accelerates the decomposition of resins. As for the decomposition-suppressing mechanism, it is presumed that the decomposition is suppressed not only by the above-mentioned esterification reaction but also by the interaction (coordination, etc.) with the transition metal catalyst as a result of being blended with the carboxyl compound (b).

In the present invention, it is particularly important to add the carboxyl compound (b) in which the α-carbon is quaternary and the carboxyl group is forming no metal salt. That is, the carboxyl group that is forming no metal salt in the carboxyl compound (b) undergoes the reaction efficiently with the transition metal catalyst and with the hydroxyl group of the EVOH copolymer. Therefore, the thermal decomposition can be suppressed to a striking degree as compared to the carboxyl compound in which the carboxyl group is forming a metal salt.

The thermal decomposition can be, further, suppressed as the carboxyl compound (b) undergoes the interaction with the metal salt compounds (residual catalyst, additives such as lubricant, etc.) in the resin.

Further, the carboxyl compound (b) used in the invention has the α-carbon which is quaternary and, therefore, undergoes the decomposition little and is not decomposed even when it receives the thermal hysteresis.

The above-mentioned actions and effects of the multilayered container of the invention will be obvious also from the results of Examples described later.

That is, in the multilayered container in which the resin composition constituting the regrind resin layer is not blended with the carboxyl compound (b)(ethylene-methacrylic acid copolymer), the acetaldehyde after the retort treatment elutes out in an amount of not less than 40 ppb, and the anti-eluting property is poor (Comparative Example 1). When a transition metal is, further, added, the organic carbon after the retort treatment elutes out in a total amount of 9.7 ppm and the acetaldehyde elutes out in an amount of 163 ppb. Namely, the anti-elution property becomes considerably inferior to that of Comparative Example 1 and, as a result, the flavor-retaining property is deteriorated (Comparative Example 2). Further, when the EVOH copolymer is blended with an acid-modified olefin resin instead of the ethylene-methacrylic acid copolymer, a difference in the decomposition start temperature is 8°C and the organic carbon after the retort treatment elutes out in a total amount of not less than 3.0 ppm. Therefore, the anti-eluting property is inferior and, as a result, the flavor-retaining property is deteriorated (Comparative Example 3).

In the case of the multilayered container that contains, as the carboxyl compound (b), a carboxyl compound (ionomer resin) in which the carboxyl group in the ethylene-methacrylic acid copolymer is forming a metal salt at a ratio of (COOH + COOM) of 0.04 relative to OH, and wherein if the resin composition constituting the regrind resin layer is blended with a transition metal catalyst (cobalt stearate) and an oxidizing organic compound, then the amount of elution of the acetaldehyde after the retort treatment is suppressed to be not more than 40 ppb. In this case, however, taste is perceived in the sensory evaluation, which indicates that flavor-retaining property is degraded (Comparative Example 1).

On the other hand, in the case of the multilayered containers having the regrind resin layer blended with the ethylene-methacrylic acid copolymer which is the carboxyl compound (b) forming no metal salt in such amounts that the ratio (COOH/OH) of the carboxyl group to the hydroxyl group in the EVOH copolymer is in a range of 0.04 to 0.4, a difference in the decomposition start temperature is not less than 20°C, the total amount of elution of the organic carbon after the retort treatment is less than 3.0 ppm, and the amount of elution of the acetaldehyde is less than 40 ppb, exhibiting excellent anti-eluting property. As a result, it is considered that the flavor-retaining property also becomes excellent (Examples 1 to 5).

Further, even in the case of the multilayered containers having the regrind resin layer containing a transition metal catalyst (cobalt stearate) and an oxidizing organic component, if the ethylene-methacrylic acid copolymer in which the carboxyl group is forming no metal salt is added in such amounts that the ratio (COOH/OH) of the carboxyl groups to the hydroxyl groups in the EVOH copolymer is 0.01 to 0.04, then, a difference in the decomposition start temperature is not less than 20°C, and the amount of elution of the acetaldehyde after the retort treatment is less than 40 ppb, thus exhibiting excellent anti-eluting property. Therefore, the flavor-retaining property also becomes excellent (Examples 6 to 10).

### Modes for Carrying Out the Invention:

### (Resin composition A)

In the present invention, the resin composition A may comprise the resin (a) alone so far as the resin (a) contains a hydroxyl group, or may contain any other resins that will be described later. Preferably, however, the resin composition A comprises the resin (a) and other resins. More concretely, the resin composition A comprises, as the resin (a), a gas-barrier resin (resin (a)) such as EVOH copolymer, an olefin resin, a base material resin used for forming the container, such as polyester, as well as a transition metal catalyst and an oxidizing organic component.

In the invention, it is attempted to suppress the thermal decomposition of the resin composition that contains a resin (resin (a)) that is easily thermally decomposed, such as EVOH copolymer or the like, and to improve the anti-eluting property and flavor-retaining property. It is, therefore, particularly desired to form the multilayered containers using, as the resin composition A so far as it contains the resin (a), not only the scrap resin generated at the time of forming the containers but also the scrap resin generated at the time of forming the containers that contain the resin (a) since the scrap resin containing the resin (a) is easily thermally decomposed through a further thermal hysteresis.

### [Resin (a)]

In the invention, the resin (a) is a thermoplastic resin having a hydroxyl group and, specifically, a barrier resin used for forming intermediate layers of the containers. Not limited thereto only, further, the resin (a) can also be an EVOH copolymer or the like.

As the EVOH copolymer, there can be exemplified those that have heretofore been used as oxygen-barrier resins in the field of packing materials. Not being limited thereto only, further, there can also be favorably used a saponified product of a copolymer obtained by saponifying an ethylene-vinyl acetate copolymer having an ethylene content of 20 to 60 mol% and, specifically, 25 to 50 mol% to a degree of saponification of not less than 96 mol% and, specifically, not less than 99 mol%. The EVOH copolymer should have a molecular weight large enough for forming a film, and, usually, has an intrinsic viscosity of not less than 0.01 dl/g and, specifically, not less than 0.05 dl/g as measured in a mixed solvent of phenol/water at a weight ratio of 85/15 at 30°C.

### [Base material resin]

As the base material resin used together with the resin (a) for forming the containers, there can be, usually, exemplified olefin resins, polyester resins and the like. The base material resin is used, for example, as inner and outer layers of the multilayered containers and is, further, used for forming intermediate layers together with a gas-barrier resin that constitutes the resin (a).

As the olefin resin, there can be exemplified polyethylenes that have heretofore been used as packing materials, such as low-density polyethylene (LDPE), medium-density polyethylene (MDPE), high-density polyethylene (HDPE), linear low-density polyethylene (LLDPE) and linear very low-density polyethylene (LVLDPE), as well as polypropylene, ethylene-propylene copolymer, polybutene-1, ethylene-butene-1 copolymer, propylene-butene-1 copolymer, ethylene-propylene-butene-1 copolymer, ethylene-vinyl acetate copolymer and ionically crosslinked olefin copolymer (ionomer).

The olefin resins are of the extrusion grade or the injection grade that have heretofore been used in the field of packing materials.

As the polyester resin, there can be exemplified thermoplastic polyesters such as polyethylene terephthalate, polybutylene terephthalate and polyethylene naphthalate, as well as blends of these polyesters with polycarbonate or acrylate resin.

For forming the containers, usually, there are preferably used polyethylene terephthalate (PET) type polyesters having ester repeating units which are mostly (usually, not less than 60 mol% and, specifically, not less than 80 mol%) the ethylene terephthalate units, having a glass transition point (Tg) of 50 to 90°C and, specifically, 55 to 80°C, and having a melting point (Tm) of 200 to 275°C and, specifically, 220 to 270°C.

As the PET type polyester, further, a homopolyethylene terephthalate is best suited but a copolymerized polyester containing the ethylene terephthalate unit in an amount within the above-mentioned range also can be preferably used.

In the copolymerized polyester, examples of the dibasic acid other than the terephthalic acid include aromatic dicarboxylic acids such as isophthalic acid, phthalic acid and naphthalenedicarboxylic acid; alicyclic dicarboxylic acids such as cyclohexanedicarboxylic acid; and aliphatic dicarboxylic acids such as succinic acid, adipic acid, sebacic acid and dodecanedioic acid, which can be used in one kind or in a combination of two or more kinds. As the diol component other than the ethylene glycol, there can be exemplified propylene glycol, 1,4-butanediol, diethylene glycol, 1,6-hexylene glycol, cyclohexanedimethanol, and ethylene oxide adduct of bisphenol A, which may be used in one kind or in two or more kinds.

The polyester resin also should have a molecular weight at least enough for forming a film, and has an intrinsic viscosity (I.V) which is, usually, in a range of 0.6 to 1.40 dl/g and, specifically, 0.63 to 1.30 dl/g.

### [Others]

The above-mentioned resin (a) is often used together with an oxidizing organic component and a transition metal catalyst, as the oxygen-absorbing resin composition, for forming the containers. In that case, the resin composition A contains the oxidizing organic component and the transition metal catalyst.

When the transition metal catalyst is contained, radicals to accelerate the decomposition of the resin are easily generated. It is, therefore, recommended to suppress the decomposition as contemplated by the invention.

As the oxidizing organic component, there can be exemplified polyene polymers such as polybutadiene (BR), polyisoprene (IR), natural rubber, nitryl-butadiene rubber (NBR), styrene-butadiene rubber (SBR), chloroprene rubber, and ethylene-propylene-diene rubber (EPDM).

It is desired that these polyene polymers have, introduced therein, a carboxylic acid, a carboxylic anhydride group, or a hydroxyl group. A monomer used for introducing these functional groups may be an ethylenically unsaturated monomer having the above functional group.

As the monomer, it is desired to use an unsaturated carboxylic acid or a derivative thereof. Concretely, there can be used α,β-unsaturated carboxylic acids such as acrylic acid, methacrylic acid, maleic acid, fumaric acid, itaconic acid, citraconic acid and tetrahydrophthalic acid; saturated carboxylic acids such as bicyclo[2,2,1]hepto-2-en-5,6-dicarboxylic acid; α,β-unsaturated carboxylic anhydrides such as maleic anhydride, itaconic anhydride, citraconic anhydride and tetrahydrophthalic anhydride; and saturated carboxylic anhydrides such as bicyclo[2,2,1]hepto-2-en-5,6-dicarboxylic anhydride.

### <Transition metal catalysts>

In the transition metal catalyst used together with the above oxidizing organic component, the transition metal is preferably a metal of the Group VIII in the periodic table, such as iron, cobalt or nickel. However, there can be, further, used a metal of the Group I such as copper or silver; a metal of the Group IV such as tin, titanium or zirconium; a metal of the Group V such as vanadium; a metal of the Group VI such as chromium; or a metal of the Group VII such as manganese. Among them, cobalt is frequently used since it works to greatly accelerate the absorption of oxygen (to accelerate the oxidation of the oxidizing organic component).

The transition metal catalyst is, usually, used in the form of an inorganic salt, an organic salt or a complex of the above transition metal, and has a low valence.

As the inorganic salt, there can be exemplified halide such as chloride; oxysalt of sulfur such as sulfate; oxyacid salt of nitrogen such as nitrate; phosphorus oxysalt such as phosphate; and silicate.

As the organic salt, there can be exemplified carboxylate, sulfonate and phosphonate. To attain the object of the invention, however, it is desired to use a carboxylate. Concrete examples thereof include transition metal salts of acetic acid, propionic acid, isopropionic acid, butanoic acid, isobutanoic acid, pentanoic acid, hexanoic acid, heptanoic acid, isoheptanoic aid, octanoic acid, 2-ethylhexanoic acid, nonanoic acid, 3,5,5-trimethylhexanoic acid, decanoic acid, neodecanoic acid, undecanoic acid, lauric acid, myristic acid, palmitic acid, margalic acid, stearic acid, arachic acid, linderic acid, tsuzuic acid, petroselinic acid, oleic acid, linoleic acid, linolenic acid, arachidonic acid, formic acid, oxalic acid, sulfamic acid and naphthenic acid.

As the complex of the transition metal, there can be exemplified complexes with the β-diketone or the β-keto acid ester. As the β-diketone or the β-keto acid ester, there can be used, for example, acetylacetone, ethyl acetoacetate, 1,3-cyclohexadione, methylenebis-1,3-cyclohexadione, 2-benzyl-1,3-cyclohexadione, acetyltetralone, palmitoyltetralone, stearoyltetralone, benzoyltetralone, 2-acetylcyclohexanone, 2-benzoylcyclohexanone, 2-acetyl-1,3-cyclohexadion, benzoyl-p-chlorobenzoylmethane, bis(4-methylbenzoyl)methane, bis(2-hydroxybenzoyl)methane, benzoylacetone, tribenzoylmethane, diacetylbenzoylmethane, stearoylbenzoylmethane, palmitoylbenzoylmethane, lauroylbenzoylmethane, dibenzoylmethane, bis(4-chlorobenzoyl)methane, benzoylacetylphenylmethane, stearoyl(4-methoxybenzoyl)methane, butanoylacetone, distearoylmethane, stearoylacetone, bis(cyclohexanoyl)methane and dipivaloylmethane.

Further, the resin composition A may contain a lubricant, a reforming agent, a pigment and an ultraviolet ray absorber that are used for forming the containers. Moreover, the container may often possess an adhesive layer. Therefore, the resin composition A may contain an adhesive resin.

### (Resin composition B)

In the present invention, the resin composition B is obtained by blending the resin composition A with the carboxyl compound (b) of which the α-carbon is quaternary and the carboxyl group is forming no metal salt.

As described above, in the case where the carboxyl groups are forming a metal salt and are, further, partly forming a crosslinked structure with the metal ions, then the carboxyl groups do not efficiently interact with the transition metal catalyst or do not react with the hydroxyl groups in the resin (a). In this case, therefore, it becomes necessary to add the carboxyl compound in large amounts to suppress the decomposition of the resin (a). In the present invention, however, the carboxyl groups in the carboxyl compound (b) are forming no metal salt, and there is no such disadvantage.

In the present invention, therefore, as the carboxyl compound (b) of which the α-carbon is quaternary, there can be exemplified ethylenically unsaturated monocarboxylic acids of which the α-carbon is quaternary, such as methacrylic acid and ethacrylic acid, as well as copolymers of an α-olefin, such as ethylene and propylene. Preferred example is an

### ethylene-methacrylic acid copolymer.

In the present invention, the carboxyl groups of the carboxyl compound (b) interact with the transition metal catalyst and suppress the action for accelerating the deterioration of the resin (a) caused by the transition metal catalyst, or the carboxyl groups are esterified upon reacting with the hydroxyl groups in the resin (a) contained in the resin composition B to thereby suppress the decomposition of the resin (a). Here, since the carboxyl groups are forming no metal salt, it is made possible to suppress the decomposition of the resin (a) to a sufficient degree despite the ratio (COOH/OH) of the amount of the carboxyl groups in the carboxyl compound (b) to the amount of the hydroxyl groups of the resin (a) in the resin composition B is less than 0.04.

Concretely, the decomposition of the resin (a) can be efficiently suppressed, and excellent formability and economical advantage can be attained if the ratio (COOH/OH) is not more than 0.4 and preferably, in a range of 0.1 to 0.01 or, more preferably, 0.04 to 0.01.

Further, the resin composition B can be blended with a compatibilizing agent. As the compatibilizing agent, there can be exemplified a saponified product of an ethylene-vinyl acetate copolymer and an acid-modified polyolefin resin. The compatibilizing agent is used in an amount of, desirably, 0.1 to 10 parts by weight and, specifically, 1 to 5 parts by weight per 100 parts by weight of the resin composition A.

### (Multilayered containers)

The multilayered container of the present invention has no limitation in the constitution of its layers or in the forming method thereof so far as it has an intermediate layer that contains the resin composition B.

For instance, the multilayered container is produced by forming a preform having a predetermined layer structure based on an injection forming or an extrusion forming that has been known per se and subjecting the obtained preform to a melt forming and a solid-phase forming (e.g., blow forming, vacuum forming, plug assist forming, etc.). The multilayered container can, further, be produced by permitting the resins to meet together in a multilayered die, extruding the molten resins so that the intermediate layer resin is sealed therein, cutting the molten resins at a portion where there is no intermediate layer resin, introducing the thus cut portion into a mold and compression-forming it in a core mold.

If a container of the shape of a bottle is to be produced, a preform of the shape of a test tube is formed and is, thereafter, blow-formed. In this case, the container of the shape of a bottle can also be obtained by forming the preform in a tubular shape, pinching off one end thereof to close the end and, thereafter, directly blow-forming it. Further, if a container of the shape of a cup is to be produced, a preform of the shape of a sheet is formed and is, thereafter, subjected to a vacuum/compressed air forming or a compressed air forming.

As the multilayer structures in the multilayered parison, multilayered sheet and multilayered preform, there is no particular limitation so far as they have an intermediate layer of the above resin composition B, and a suitable layer structure may be employed depending on the use. There can be exemplified the following layer structures though not limited thereto only.

In the following examples, the intermediate layer comprising the resin composition B is denoted as RG layer, the oxygen-barrier layer comprising a barrier resin such as EVOH copolymer is denoted as GB layer, the oxygen-absorbing layer is denoted as Sc layer, the deodorizing component-containing layer is denoted as OE layer, and the adhesive layer is denoted as AD layer. Further, in the case where the deodorizing component is contained, the layer is denoted like RG (OE) layer.
Inner layer/RG layer/outer layer;
Inner layer/AD layer/RG layer/AD layer/outer layer;
Inner layer/RG layer/AD layer/GB layer/AD layer/outer layer;
Inner layer/RG layer/AD layer/Sc layer/AD layer/outer layer;
Inner layer/RG(OE) layer/AD layer/Sc layer/AD layer/outer layer;
Inner layer/OE layer/RG layer/AD layer/Sc layer/AD layer/outer layer;
Inner layer/RG layer/AD layer/GB layer/AD layer/RG layer/outer layer;
Inner layer/RG layer/AD layer/Sc layer/AD layer/RG layer/outer layer;
Inner layer/RG(OE) layer/AD layer/Sc layer/AD layer/RG layer/outer layer;
Inner layer/OE layer/RG layer/AD layer/Sc layer/AD layer/RG layer/outer layer;
Inner layer/AD layer/GB layer/AD layer/RG layer/outer layer;
Inner layer/AD layer/Sc layer/AD layer/RG layer/outer layer;
Inner layer/OE layer/AD layer/Sc layer/AD layer/RG layer/outer layer;
Inner layer/OE layer/AD layer/GB layer/Sc layer/GB layer/AD layer/RG layer/outer layer;
Inner layer/RG(OE) layer/AD layer/GB layer/Sc layer/GB layer/AD layer/RG layer/outer layer;
Inner layer/OE layer/RG layer/AD layer/GB layer/Sc layer/GB layer/AD layer/RG layer/outer layer;
Inner layer/AD layer/GB layer/AD layer/RG layer/Sc layer/AD layer/GB layer/AD layer/outer layer;
Inner layer/OE layer/AD layer/GB layer/AD layer/RG layer/Sc layer/AD layer/GB layer/AD layer/outer layer

Among the above layer constitutions, preferred are the inner layer/OE layer/RG layer/AD layer/GB layer/Sc layer/GB layer/AD layer/RG layer/outer layer, or the inner layer/AD layer/GB layer/AD layer/RG(OE) layer/Sc layer/AD layer/GB layer/AD layer/outer layer.

There is no particular limitation on the resins that constitute the inner and outer layers which, therefore, can be formed by using various kinds of thermoplastic resins like the above-mentioned olefin resin and polyester resin. Here, however, it is desired to use the base material resin contained in the resin composition A from the standpoint of adhesion between the layers.

The inner layer and the outer layer do not necessarily have to be formed by using the resin of the same kind. It is allowable, for instance, to form the outer layer using the above-mentioned polyester resin and form the inner layer using the olefin resin, as a matter of course. Further, the inner and outer layers may, as required, be blended with a lubricant, a reforming agent, a pigment, an ultraviolet-ray absorber and the like.

As described above, further, as the intermediate layer, there can be formed an oxygen-barrier layer (GB layer) comprising a barrier resin such as EVOH copolymer, or there can be formed an oxygen-absorbing layer (Sc layer) using a barrier resin such as EVOH copolymer or an olefin resin as a matrix and dispersing therein a known oxygen-absorbing component comprising an oxidizing organic component such as polyene polymer and a transition metal catalyst.

By forming a deodorizing component-containing layer (OE layer) on the inner side of the oxygen-absorbing layer (Sc layer), further, odor generated accompanying the oxygen-absorbing reaction is trapped by the deodorizing component-containing layer, and a favorable flavor-retaining property is maintained.

As the deodorizing component, there can be used those that have been known per se, such as activated carbon, silica gel, natural or synthetic zeolite, active clay, active aluminum oxide, magnesium silicate, aluminum silicate, hydrotalcite and amino group-containing compound in one kind or in a combination of two or more kinds. As the resin that serves as a matrix for the deodorizing components, it is desired to use a resin of the same kind as the thermoplastic resin that constitutes the inner layer.

As described above, further, it is also allowable to add the deodorizing components to the regrind-resin layer (RG layer) and to the oxygen-barrier layer (GB layer) that are located on the inner side of the oxygen-absorbing layer.

Further, though the adhesive layer (AD layer) does not necessarily have to be formed, it is allowable to use, for example, a graft-modified olefin resin that is graft-modified with the maleic anhydride and that has heretofore been used as an adhesive resin for forming the adhesive layers. In this case, the olefin resin that is to be graft-modified is, desirably, a polyethylene, a polypropylene or an ethylene/α-olefin copolymer.

In the multilayered container of the present invention, further, it is desired that the total amount of organic carbon eluted out after the retort sterilization is less than 3.0 ppm, preferably, less than 2.0 ppm and, specifically, less than 1.0 ppm.

### EXAMPLES

The present invention will be further described by way of the following Examples and Comparative Examples to which only, however, the invention is in no way limited.

In Examples and Comparative Examples, various kinds of measurements were taken by the methods described below.

### (1) Decomposition start temperature;

The decomposition start temperature was measured by using a thermal analyzer (TG/DTA7220 manufactured by Hitachi High Technologies Co.). Measurement was performed in a nitrogen stream by placing a measuring sample of about 2 to about 10 mg on an aluminum pan, and elevating the temperature to 40 to 550°C at a rate of 20°C per minute. The decomposition start temperature was found from a point where an extrapolation line of the TG curve in a steady state of before the decomposition takes place intersects an extrapolation line of a temperature at which a differential weight loss on heating (DTG) becomes a maximum in the initial weight loss observed near 200 to 400°C on a curve of weight loss on heating (TG curve). A value found at the intersecting point was defined as the decomposition start temperature.

When the decomposition start temperature of the ethylene-vinyl alcohol copolymer (hereinafter EVOH) in the resin composition B was higher than the decomposition start temperature of the EVOH in the resin composition A by 20°C or more, the decomposition start temperature was evaluated to be o (good). The decomposition start temperature was evaluated to be × (poor) if it was higher by less than 20°C.

### (2) Total amount of elution of the organic carbon (TOC);

The total amount of the organic carbon eluted out was measured by using an instrument for measuring the total amount of elution of organic carbon (TOC-5000A manufactured by Shimadzu Corporation). When the TOC was not less than 1 ppm, there was a tendency that taste due to the eluted matter was perceived. Specifically, when the TOC was not less than 3 ppm, there was a tendency that taste was perceived strongly.

### (3) Amount of elution of acetaldehyde (AA);

1.0 Milliliter of sample water was picked up from the container, and 0.2 ml of a 2,4-dinitrophenyl hydrazine·phosphoric acid solution of a concentration of 0.1% was added thereto. After 30 minutes, the solution was filtered through a 0.45-µm membrane filter, and the filtrate was measured by using a high-speed liquid chromatography (Agilent 1200 Infinity manufactured by Agilent Technologies). A threshold value of taste of the acetaldehyde in water was less than 40 ppb.

### (4) Evaluating the flavor-retaining property (sensory evaluation);

The sample water in the container after the retort treatment was evaluated for its flavor by three panelists. Water was evaluated to be ⊚ (very good) when it had almost no taste, evaluated to be o (good) when it had a slight degree of taste, evaluated to be Δ (fair) when it had a taste, and × (bad) when it had a strong taste.

### (Example 1)

Pellets of polypropylene (hereinafter PP) (MFR 0.5 g/10 min, 230°C, load 2160 g), EVOH (ethylene content of 27 mol%, MFR 4.0 g/10 min, 210°C, load 2160 g) and adhesive resin (hereinafter AD)(MFR 5.7 g/10 min, 230°C, load 2160 g) were mixed together such that their weight ratio was PP/EVOH/AD = 93/5/2. To 100 parts by weight of the above mixed pellets, there were added and mixed 3 parts by weight of a compatibilizing agent (GF31 produced by Kuraray Co. Ltd.) and 5 parts by weight of an ethylene-unsaturated carboxylic acid copolymer (hereinafter EMAA)(carboxylic acid content 3.1 mol%, MFR 8.0 g/10 min, 190°C, load 2160 g). The mixture thereof was melt-kneaded by using a single axis extruder at a forming temperature of 250°C to prepare pellets of the resin composition B.

Next, by using a multilayered film-forming machine, there was prepared a film comprising three layers of PP inner layer/resin composition B layer/PP outer layer. The PP used here possessed an MFR of 0.5 g/10 min (230°C, load 2160 g), and the respective layers possessed thicknesses of 20/100/20 (µm). The film was cut into a piece having a long side of 270 mm and a short side of 190 mm. A set of two pieces thereof was heat-sealed at the ends over a width of 1 cm to form a pouch. The thus prepared pouch was filled with 100 mL of ultrapure water of normal temperature, subjected to the retort treatment under the sterilizing conditions of 121°C for 30 minutes, and water in the container after the retort treatment was evaluated for the elution of components. Table 1 shows the decomposition start temperature, total amount of the organic carbon eluted out, amount of the acetaldehyde eluted out and the results of the sensory evaluation.

### (Example 2)

A resin composition B and a pouch thereof were prepared in the same manner as in Example 1 but adding 0.42 parts by weight of cobalt stearate (hereinafter StCo) (400 ppm calculated as cobalt) in addition to 3 parts by weight of the compatibilizing agent and 5 parts by weight of the EMAA that have been added per 100 parts by weight of the mixed pellets of PP/EVOH/AD. Table 1 shows the results of evaluation.

### (Example 3)

A resin composition B and a pouch thereof were prepared in the same manner as in Example 2 but using the EMAA containing 4.3 mol% of acid (MFR 7.0 g/10 min, 190°C, load 2160 g). Table 1 shows the results of evaluation.

### (Example 4)

A resin composition B and a pouch thereof were prepared in the same manner as in Example 2 but filling the pouch with ultrapure water of 80°C and without conducting the retort treatment. Table 1 shows the results of evaluation.

### (Example 5)

By using a machine for forming a multilayered sheet by co-extrusion, there was prepared a multilayered sheet of a constitution of PP inner layer/resin composition B layer/AD layer/EVOH layer/AD layer/PP outer layer. The resins used for the layers were the same as those of Example 1. The resin composition B used here was the one prepared by adding and mixing together the pellets of PP/EVOH/AD at a ratio of 95.8/3/1.2 and, further, adding and mixing 3 parts by weight of the compatibilizing agent (GF31 produced by Kuraray Co. Ltd.) and 3 parts by weight of the EMAA (carboxylic acid content of 3.1 mol%) per 100 parts by weight of the above mixed pellets. The forming temperatures were 190 to 230°C for the PP layer, 180 to 200°C for the resin composition B layer, 200 to 220°C for the adhesive resin layer, and 180 to 200°C for the EVOH layer. The obtained sheet possessed a thickness of 1.2 mm, the thicknesses of the layers being PP inner layer/resin composition B layer/AD layer/EVOH layer/AD layer/PP outer layer = 110/450/45/90/45/450 (µm).

Next, by using a compressed air/vacuum forming machine, a cup was formed from the above sheet. By using a heater, the surface of the sheet was heated to 185°C, and the cup was formed by the plug assist compressed air/vacuum forming. The thus obtained cup was filled with 85 mL of ultrapure water of normal temperature, and was subjected to the retort treatment under the sterilizing conditions of 121°C for 30 minutes. Table 1 shows the results of evaluation.

### (Example 6)

A multilayered sheet and a cup thereof were formed and the elution was evaluated in the same manner as in Example 5 but using a sheet of a layer constitution of PP inner layer/resin composition B layer/AD layer/EVOH layer/oxygen absorber (hereinafter Sc) layer/EVOH layer/AD layer/PP outer layer, and using a resin composition B obtained by adding and mixing together the pellets of PP/EVOH/Sc/AD at a ratio of 93.4/3.6/1.8/1.2 and, further, adding and mixing 3 parts by weight of the compatibilizing agent and 5.4 parts by weight of the EMAA per 100 parts by weight of the above mixed pellets. The Sc used here was the one comprising chiefly EVOH and containing an oxidizing organic component and a transition metal catalyst, and was formed at a temperature of 180 to 200°C. The obtained sheet possessed a thickness of 1.2 mm, the thicknesses of the layers being PP inner layer/resin composition B layer/AD layer/EVOH layer/Sc layer/EVOH layer/AD layer/PP outer layer = 110/380/45/60/60/60/45/440 (µm).

The thus obtained cup was filled with 85 mL of ultrapure water of normal temperature, and was subjected to the retort treatment under the sterilizing conditions of 121°C for 30 minutes. Table 1 shows the results of evaluation.

### (Example 7)

By using the machine for forming a multilayered sheet by co-extrusion, there was prepared a multilayered sheet of a constitution of PP inner layer/resin composition B layer/AD layer/EVOH layer/Sc layer/EVOH layer/AD layer/PP outer layer. The resins used for the layers were the same as those of Example 1. The resin composition B used here was prepared by mixing the pellets of PP/EVOH/Sc/AD at a weight ratio of 78/12/6/4 and kneading them and forming them into pellets thereof by using a biaxial extruder. The pellets were then mixed with the PP at a weight ratio of 30/70, and to which the EMAA (carboxylic acid content of 3.1 mol%) was added in an amount of 3 parts by weight per 100 parts by weight of the mixture thereof.

The obtained sheet possessed a thickness of 1.2 mm, the thicknesses of the layers being PP inner layer/resin composition B layer/AD layer/EVOH layer/Sc layer/EVOH layer/AD layer/PP outer layer = 150/360/20/65/60/75/30/440 (µm).

Next, a cup was formed from the above sheet by the plug assist compressed air/vacuum forming by using the compressed air/vacuum forming machine. The obtained cup possessed a mouth diameter of 76 mm and a volume of 110 mL. Table 1 shows the results of evaluation.

### (Example 8)

A multilayered sheet and a cup thereof were formed in the same manner as in Example 7 but changing the amount of the EMAA in the resin composition B to 5 parts by weight, and the elution was evaluated (COOH/OH = 0.04). Table 1 shows the results of evaluation.

### (Example 9)

By using the machine for forming a multilayered sheet by co-extrusion, there was prepared a multilayered sheet of a constitution of PP inner layer/deodorizing component-containing (OE) layer/AD layer/EVOH layer/Sc layer/EVOH layer/AD layer/PP outer layer. The resins used for the layers were the same as those of Example 8. The OE layer was the one comprising chiefly the polypropylene and containing a synthetic zeolite. The thicknesses of the layers were PP inner layer/OE layer/AD layer/EVOH layer/Sc layer/EVOH layer/AD layer/PP outer layer = 360/140/20/70/65/60/25/460 (µm).

Next, the multilayered sheet that was pulverized and recovered and the PP were mixed together at a weight ratio of 50/50. To 100 parts by weight of the mixture thereof, the EMAA (carboxylic acid content of 3.1 mol%) was added in an amount of 3 parts by weight to prepare a resin composition B, and from which a sheet was formed (COOH/OH = 0.01). The obtained sheet was a multilayered sheet of a layer constitution of PP inner layer/OE layer/AD layer/EVOH layer/Sc layer/EVOH layer/AD layer/resin composition B layer/PP outer layer. The thicknesses of the layers were, from the inner layer, 360/140/20/70/65/60/25/350/110 (µm).

Next, a cup was formed by the plug assist compressed air/vacuum forming by using the compressed air/vacuum forming machine. Table 1 shows the results of evaluation.

### (Example 10)

A multilayered sheet and a cup thereof were formed in the same manner as in Example 9 but changing the amount of the EMAA in the resin composition B to 5 parts by weight, and the elution was evaluated (COOH/OH = 0.02). Table 1 shows the results of evaluation.

### (Comparative Example 1)

A resin composition A and a pouch thereof were prepared in the same manner as in Example 1 but without adding the EMAA. Table 1 shows the results of evaluation.

### (Comparative Example 2)

A resin composition A and a pouch thereof were prepared in the same manner as in Example 2 but without adding the EMAA. Table 1 shows the results of evaluation.

### (Comparative Example 3)

A resin composition A and a pouch thereof were prepared in the same manner as in Example 2 but using a maleic anhydride-modified polypropylene (hereinafter MAH) (maleic anhydride content of 0.26 mol%, MFR 9.1 g/10 min, 230°C, load 2160 g) instead of the EMAA. Table 1 shows the results of evaluation.

### (Comparative Example 4)

A resin composition B and a pouch thereof were prepared in the same manner as in Example 2 but adding the EMAA in an amount of 50 parts by weight. Despite the EMAA was added in an amount of 50 parts by weight, the formability was favorable. Table 1 shows the results of evaluation.

### (Comparative Example 5)

A resin composition A and a pouch thereof were prepared in the same manner as in Comparative Example 2 but filling the pouch with ultrapure water of 80°C without conducting the retort treatment. Table 1 shows the results of evaluation.

### (Comparative Example 6)

A resin composition A and a pouch thereof were prepared in the same manner as in Comparative Example 2 but adding the StCo in an amount of 0.24 parts by weight. Table 1 shows the results of evaluation.

### (Comparative Example 7)

A resin composition A and a pouch thereof were prepared in the same manner as in Comparative Example 6 but adding the calcium stearate (StCa) instead of the StCo. Table 1 shows the results of evaluation.

### (Comparative Example 8)

A multilayered sheet and a cup thereof were prepared in the same manner as in Example 5 but without adding the EMAA. Table 1 shows the results of evaluation.

### (Comparative Example 9)

A multilayered sheet and a cup thereof were prepared in the same manner as in Example 6 but without adding the EMAA. Table 1 shows the results of evaluation.

### (Comparative Example 10)

A multilayered sheet and a cup thereof were prepared in the same manner as in Example 7 but without adding the EMAA. Table 1 shows the results of evaluation.

### (Comparative Example 11)

A multilayered sheet and a cup thereof were prepared and the elution was evaluated (COOH +COOM/OH = 0.04) in the same manner as in Example 7 but using an ethylene-methacrylic acid copolymer neutralized with a metal (carboxylic acid content of 5.4 mol%, degree of neutralization with Na of 50%, MFR 0. 9 g/10 min (190°C, load 2160 g)) instead of using the EMAA. Table 1 shows the results of evaluation.

### (Comparative Example 12)

A multilayered sheet and a cup thereof were prepared and the elution was evaluated (COOH +COOM/OH = 0.02) in the same manner as in Comparative Example 11 but using the ethylene-methacrylic acid copolymer neutralized with the metal in an amount of 1.5 parts by weight. Table 1 shows the results of evaluation.

### (Comparative Example 13)

A multilayered sheet and a cup thereof were prepared and the elution was evaluated in the same manner as in Example 7 but using the compatibilizing agent (GF31 produced by Kuraray Co. Ltd.) in an amount of 3 parts by weight instead of using the EMAA. Table 1 shows the results of evaluation.

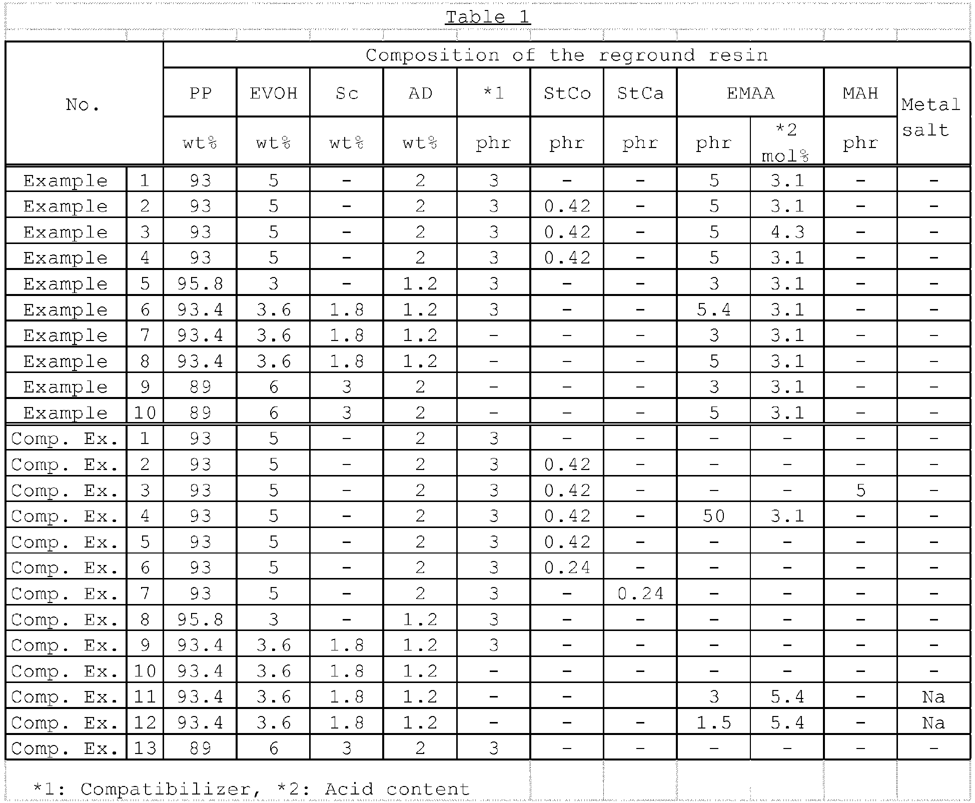

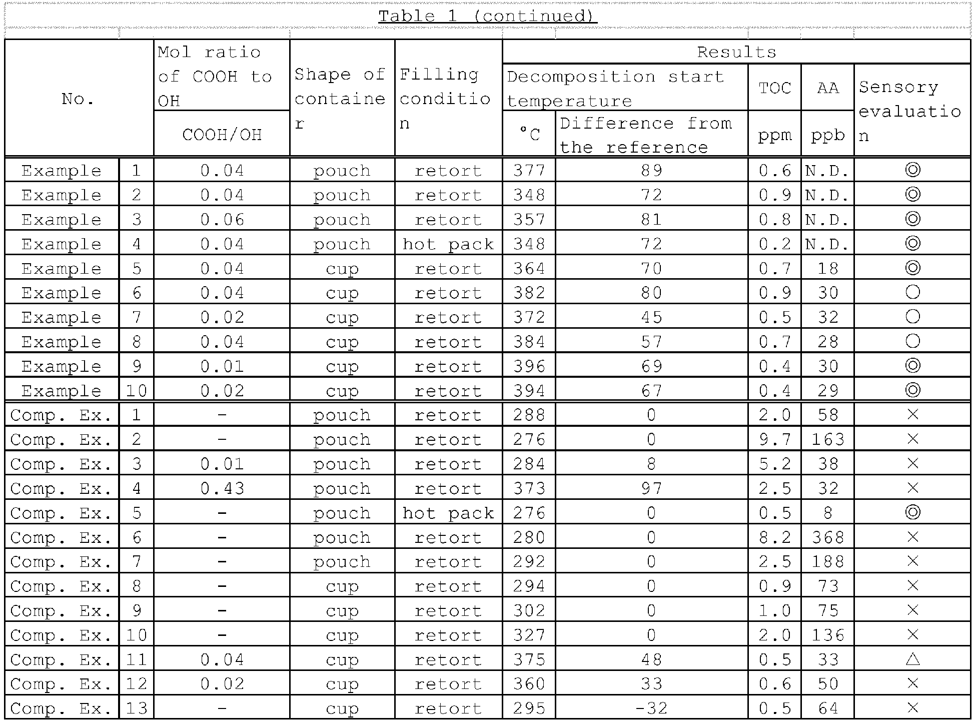

### (Consideration)

The anti-eluting property is a factor that affects the flavor-retaining property. That is, if the anti-eluting property is poor, components may elute out much and the flavor-retaining property may become poor. If the anti-eluting property is excellent, components may elute out little and the flavor-retaining property may become excellent. However, there is no perfect correlation between the amounts of components eluted out and the flavor-retaining property. A sensory evaluation by actual tasting is suitable for evaluating flavor-retaining property of the content.

In Comparative Examples 1 to 3, 5 to 10 and 13 in which no EMAA is contained in the resin composition A layer, the decomposition starts at low temperatures close to a region of forming temperatures (near 250°C). It is, therefore, considered that low-molecular components were much generated and eluted out. In Comparative Example 4, the decomposition start temperature is high but the EMAA having a melting point of about 100°C is much contained. It is, therefore, considered that the resin composition B was plasticized during the retort treatment, and a decomposition product formed in small amounts has diffused easily and eluted out. In Comparative Examples 11 and 12 in which the ethylene-methacrylic acid copolymer neutralized with a metal is added, the elution of components is suppressed but part of the ethylene-methacrylic acid copolymer that is used forms a metal salt. It is, therefore, considered that the interaction with the transition metal catalyst was weaker than that of the ethylene-methacrylic acid copolymer (EMAA) that was forming no metal salt. Accordingly, the action of accelerating the deterioration was not suppressed despite of using the transition metal catalyst, and the results of sensory evaluation became poor.

### Industrial Applicability:

In the present invention, the EVOH copolymer is effectively suppressed from being thermally decomposed even when the multilayered container uses the scrap resin that contains the EVOH copolymer and the like or even when the multilayered container, further, uses oxidizing organic components and transition metal catalysts. Even when subjected to the retort sterilization, therefore, it is made possible to prevent a decrease in the anti-eluting property and flavor-retaining property. The multilayered containers can, therefore, be favorably used in such fields where economy and retention of taste and flavor are required. By utilizing such properties, the multilayered container can be effectively used for storing beverages such as beer, wine, fruit juice, and carbonated soft drinks, as well as fruits, nuts, vegetables, meat products, infant foods, coffee, jam, mayonnaise, ketchup, edible oil, dressing, sauces, tsukudani (food boiled down in soy sauce), dairy products, processed fish products, pet food and the like. By providing an oxygen-barrier layer, further, the multilayered container can be very favorably used for containing a variety of contents such as medicines, cosmetics, gasoline, etc. that may be deteriorated in the presence of oxygen.

## Claims

1. A multilayered container having an intermediate layer that contains a resin composition B obtained by blending a resin composition A that contains at least a resin (a) having a hydroxyl group with a carboxyl compound (b) of which the α-carbon is quaternary and of which the carboxyl group is forming no metal salt, wherein a ratio (COOH/OH) of the amount of the carboxyl groups of the carboxyl compound (b) to the amount of the hydroxyl groups of the resin (a) in the resin composition A is not more than 0.4.

2. The multilayered container according to claim 1, wherein said carboxyl compound (b) is an ethylene-methacrylic acid copolymer.

3. The multilayered container according to claim 1 or 2, wherein the resin (a) is an ethylene-vinyl alcohol copolymer.

4. The multilayered container according to any one of claims 1 to 3, wherein said resin composition A, further, contains an olefin resin.

5. The multilayered container according to any one of claims 1 to 4, wherein the ratio (COOH/OH) of the amount of the carboxyl groups of said carboxyl compound (b) to the amount of the hydroxyl groups of the resin (a) in said resin composition A is 0.04 to 0.4.

6. The multilayered container according to any one of claims 1 to 5, wherein said resin composition A, further, contains an oxidizing organic component and a transition metal compound, and a ratio (COOH/OH) of the amount of the carboxyl groups of said carboxyl compound (b) to the amount of the hydroxyl groups of the resin (a) in said resin composition A is not more than 0.04.

7. The multilayered container according to any one of claims 1 to 6, wherein the total amount of the organic carbon eluted out after the retort sterilization is less than 3.0 ppm.

8. The multilayered container according to any one of claims 1 to 6, wherein the amount of the acetaldehyde eluted out after the retort sterilization is less than 40 ppb.

9. The multilayered container according to any one of claims 3 to 8, wherein a decomposition start temperature of the ethylene-vinyl alcohol copolymer in said resin composition B is 20°C or more higher than a decomposition start temperature of the ethylene-vinyl alcohol copolymer in said resin composition A.

10. The multilayered container according to any one of claims 1 to 9, wherein the multilayered container includes inner and outer layers comprising an olefin resin and an intermediate barrier layer comprising a barrier resin, and the intermediate layers that contain said resin composition B are interposed between any adjacent layers selected from the inner layer, the outer layer and the intermediate barrier layer.

11. The multilayered container according to claim 10, wherein said intermediate barrier layer has a multilayered structure comprising a barrier layer/an oxygen-absorbing layer/a barrier layer.

12. The multilayered container according to claim 10 or 11, wherein the layer constitution comprises a polypropylene inner layer/a regrind resin layer/an adhesive layer/a barrier layer/an oxygen-absorbing layer/a barrier layer/an adhesive layer/a regrind resin layer/a polypropylene outer layer in this order from the inner side, and said regrind resin layer contains said resin composition B.

13. The multilayered container according to claim 10 or 11, wherein a deodorizing component is contained in any layer that is positioned on the inner side of said oxygen-absorbing layer.

14. The multilayered container according to claim 13, wherein the layer constitution comprises a polypropylene inner layer/a deodorizing component-containing layer/as required, a regrind resin layer/an adhesive layer/a barrier layer/an oxygen-absorbing layer/a barrier layer/an adhesive layer/a regrind resin layer/a polypropylene outer layer in this order from the inner side, and said regrind resin layer contains said resin composition B.
